# EUROPÄISCHE PATENTANMELDUNG

(11) **EP 1 808 649 A2**
(43) Veröffentlichungstag der Anmeldung: **18.07.2007**
(21) Anmeldenummer: 07000055.9
(22) Anmeldetag: 03.01.2007
(51) Int. Cl.: F24J 2/46

(54) **Schutzvorrichtung für einen Solarenergiekollektor**

(30) Priorität: 14.01.2006 DE 102006001936
(71) Anmelder: Schrapp, Ulrich, 86343 Königsbrunn (DE)
(72) Erfinder: Schrapp, Ulrich, 86343 Königsbrunn (DE)
(74) Vertreter: Munk, Ludwig

(57) **Zusammenfassung**

Eine Schutzvorrichtung für einen Solarenergiekollektor weist ein Rahmengestell auf, das eine Abdeckung in einer zumindest die Oberseite des Solarenergiekollektors überdeckenden Position in einem vorbestimmten Abstand zu dem Solarenergiekollektor trägt. Die Abdeckung besteht aus einem strahlungsdurchlässigen flexiblen Flachmaterial, das durch das Rahmengestell dauerhaft in einer dreidimensionalen Form gehalten wird. Die Schutzvorrichtung ist durch mit dem Rahmengestell verbundene oder verbindbare Befestigungsglieder entweder an einem Bestandteil oder Zubehörteil des Solarenergiekollektors oder an einem Dach eines Gebäudes befestigbar. Das flexible Flachmaterial kann eine transparente Kunststoffolie oder ein Gitter oder Geflecht aus Metall-, Kunststoff-, Karbon- oder Silikatdrähten, -fäden oder -schnüren sein. Der Bestandteil bzw. das Zubehörteil des Solarenergiekollektors kann ein Gehäuserahmen oder ein zur Befestigung des Solarenergiekollektors auf dem Dach eines Gebäudes vorgesehener Halter sein.

## Beschreibung

Die Erfindung betrifft eine Schutzvorrichtung für einen Solarenergiekollektor nach dem Oberbegriff des Anspruchs 1, wie sie aus der DE 100 32 227 A1 bekannt ist. Diese bekannte Vorrichtung weist eine Abdeckung für den Solarenergiekollektor auf, die strahlungsundurchlässig und als Rollo ausgebildet ist. Sie ist in erster Linie dazu vorgesehen, die auf den Solarenergiekollektor einfallende Strahlungsleistung zu regulieren. In der geschlossenen Stellung schützt das Rollo den Solarenergiekollektor zugleich vor einer Beschädigung durch Hagelschlag und ähnliches. Der Rahmen der Schutzvorrichtung ist schwenkbar gelagert, um bei Bedarf hochgeklappt werden zu können. In diesem Fall dient die Unterseite der Abdeckung als Spiegelfläche zur Umlenkung zusätzlicher Strahlungsleistung auf den Solarenergiekollektor.

Der Aufbau der bekannten Vorrichtung ist im Hinblick auf die Funktion der Regulierung der einfallenden Strahlungsleistung notwendigerweise relativ aufwendig. Ferner erfüllt die Vorrichtung ihre Schutzfunktion nur bei vollständig geschlossenem Rollo, was einer Außerbetriebsetzung des Solarenergiekollektors entspricht. Die Eignung der Vorrichtung zum Schutz eines Solarenergiekollektors bezieht sich deshalb in erster Linie auf einen Zeitraum vorübergehender Abwesenheit der Bewohner eines Gebäudes.

Der Erfindung liegt daher die Aufgabe zugrunde, eine Schutzvorrichtung der eingangs erwähnten Art zu schaffen, die kostengünstig herstellbar und auf einfache Weise auch nachträglich an einem vorhandenen Solarenergiekollektor montierbar ist, und die einen Solarenergiekollektor dauerhaft gegen mechanische Beschädigung insbesondere witterungsbedingter Art schützt.

Diese Aufgabe wird erfindungsgemäß durch eine Schutzvorrichtung mit den Merkmalen des Anspruchs 1 gelöst. Vorteilhafte Ausgestaltungen sind in den Unteransprüchen angegeben.

Durch die erfindungsgemäße Ausbildung der Schutzvorrichtung als ein strahlungsdurchlässiges flexibles Flachmaterial, das von einem Rahmengestell dauerhaft in einer dreidimensionalen Form gehalten wird und durch Befestigungsglieder entweder an einem Bestandteil oder Zubehörteil des Solarenergiekollektors oder an einem Dach eines Gebäudes befestigbar ist, ergibt sich ein einfacher und kostengünstiger Aufbau und es können bereits vorhandene Solarenergiekollektoren ohne weiteres mit einer solchen Schutzvorrichtung nachgerüstet werden, um sie dauerhaft vor mechanischer Beschädigung zu schützen.

Besonders vorteilhaft ist eine Realisierung des Rahmengestells aus Metall- oder Kunststoffprofilen, die an den Ecken durch eingesteckte Verbindungselemente miteinander verbunden sind. Ein solcher Aufbau von Rahmengestellen aus Profilen und Eckverbindern ist beispielsweise aus dem Bereich der Insektenschutzgitter für Gebäudefenster und -türen sowie aus dem Bereich des Aufbaus von Messeständen bekannt. Die Abmessungen eines Rahmengestells können in diesem Fall auf einfache Weise durch Abschneiden von Stücken geeigneter Länge von einem Einheitsprofil beliebig variiert und an die Abmessungen eines vorhandenen Solarenergiekollektors angepaßt werden.

Ebenfalls von besonderem Vorteil ist es, wenn die Befestigungsglieder des Rahmengestells jeweils einen Flansch aufweisen, dessen Form so an die Konturen eines Bestandteils oder Zubehörteils des Solarenergiekollektors angepaßt ist, dass der Flansch im mit dem Rahmengestell verbundenen Zustand der Befestigungsglieder an besagten Bestandteil des Solarenergiekollektors anlegbar ist. Mittels eines solchen Befestigungsgliedes kann die Schutzvorrichtung nämlich direkt an dem zu schützenden Solarenergiekollektor befestigt werden, wodurch sich ein Eingriff in das Dach zur Anbringung der Schutzvorrichtung erübrigt und die Ausrichtung der Schutzvorrichtung zu dem Solarenergiekollektor erleichtert wird.

Wenn der Flansch besagten Bestandteil oder Zubehörteil des Solarenergiekollektors im angelegten Zustand geeignet umgreift, dann kann er daran mittels Schraubzwingen befestigt werden, so dass an Komponenten des Solarenergiekollektors keine Bohrungen ausgeführt zu werden brauchen, was eine erhebliche Vereinfachung der Montage bedeutet.

Weitere Merkmale und vorteilhafte Eigenschaften der Erfindung sind den Unteransprüchen sowie der nachfolgenden Beschreibung von Ausführungsbeispielen anhand der Zeichnungen zu entnehmen. In diesen zeigt
- Fig. 1: eine schematische Explosionsdarstellung einer erfindungsgemäßen Schutzvorrichtung für einen Solarenergiekollektor,
- Fig. 2: eine erste Ausführungsform der Befestigung einer erfindungsgemäßen Schutzvorrichtung,
- Fig. 3: eine zweite Ausführungsform der Befestigung einer erfindungsgemäßen Schutzvorrichtung,
- Fig. 4: eine Einzelheit einer dritten Ausführungsform der Befestigung einer erfindungsgemäßen Schutzvorrichtung,
- Fig. 5: eine vierte Ausführungsform der Befestigung einer erfindungsgemäßen Schutzvorrichtung, und
- Fig. 6: eine fünfte Ausführungsform der Befestigung einer erfindungsgemäßen Schutzvorrichtung.

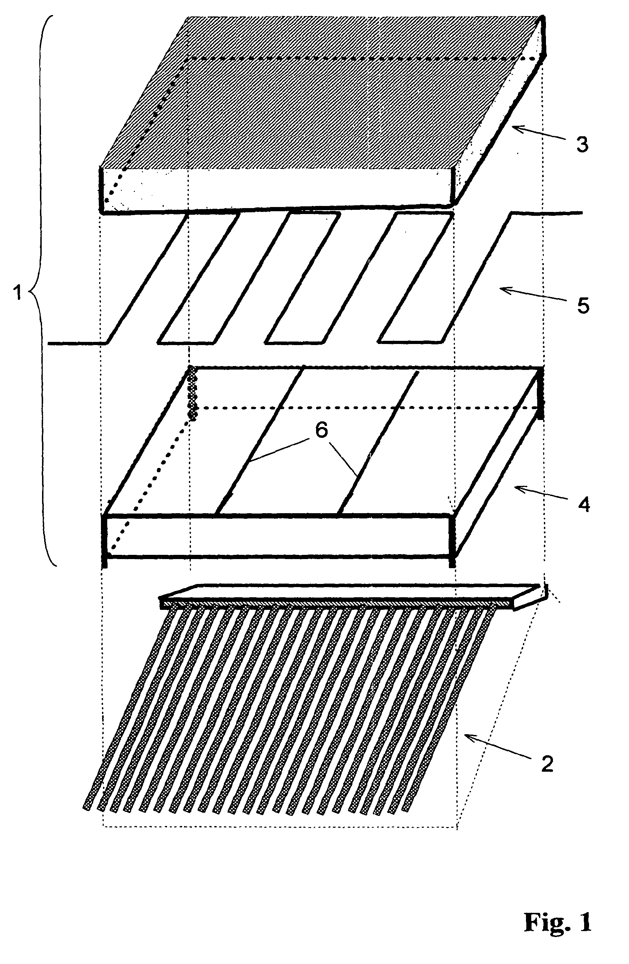

Fig. 1 zeigt in Form einer Explosionsdarstellung eine erfindungsgemäße Schutzvorrichtung 1 für einen Solarenergiekollektor 2, deren Hauptbestandteile eine Abdeckung 3 aus flexiblem Flachmaterial sowie ein Rahmengestell 4 sind. Optional kann die Schutzvorrichtung 1 auch ein Heizelement 5 umfassen, auf dessen Funktion später noch eingegangen wird. Der Solarenergiekollektor 2 ist hierbei rein beispielhaft als Röhrenkollektor dargestellt. Es könnte sich dabei jedoch ebenso gut um einen Flächenkollektor oder auch um ein Solarzellenfeld zur Erzeugung elektrischen Stromes handeln.

Das flexible Flachmaterial der Abdeckung 3 kann entweder eine transparente Kunststoffolie oder ein Gitter oder Geflecht aus Drähten, Fäden, Schnüren oder dergleichen sein. Für ein Gitter oder Geflecht kommen verschiedenste Materialien wie Metall, Kunststoff, Karbon oder Silikat in Frage. Ein einfaches Beispiel ist ein Geflecht aus verzinktem Stahldraht, wie es unter anderem für Kleintierkäfige Verwendung findet. Wesentlich ist hierbei, dass das Gitter oder Geflecht engmaschig genug sein muß, um insbesondere Hagelkörner einer Größe, die zur Beschädigung des Solarenergiekollektors führen würde, abzuhalten, und dass das Material korrosionsbeständig gegenüber Feuchtigkeit und beständig gegenüber UV-Strahlung sein muß. Darüber hinaus sollte es vorzugsweise flexibel genug sein, um auf ein dreidimensionales Rahmengestell 4 aufgespannt werden zu können, und zwar am besten in einem Stück.

Das in Fig. 1 gezeigte Rahmengestell 4 ist insgesamt quaderförmig und so groß, dass es von oben her ohne weiteres über den Solarenergiekollektor 2 gesetzt werden kann und seine Kanten dann einen gewissen Abstand von den äußeren Konturen des Solarenergiekollektors 2 haben. Die Abdeckung 3 überspannt die Oberseite und die vier an diese angrenzenden Seitenflächen des Rahmengestells 4, um Hagelkörner, Steine, Zweige und andere Fremdkörper von dem Solarenergiekollektor 2 fernzuhalten. Die Abdeckung 3 ist auf das Rahmengestell 4 aufgespannt und bildet hierdurch eine dreidimensionale Form, nämlich einen nur an seiner Unterseite offenen und den Solarenergiekollektor 2 ansonsten vollständig umschließenden Quader, dessen Kanten durch die Kanten des Rahmengestells 4 definiert werden.

Die beiden längeren Kanten der Oberseite des Rahmengestells 4 sind durch Stege 6 miteinander verbunden, deren Aufgabe es ist, den die Oberseite des Solarenergiekollektors 2 überdeckenden Teil der Abdeckung 3 abzustützen und ein Durchhängen desselben auf den Solarenergiekollektor 2 zu verhindern. Die Anzahl und Anordnung der benötigten Stege 6 hängt von der Nachgiebigkeit der Abdeckung 3 bzw. der Größe des Feldes ab.

Das Rahmengestell 4 kann beispielsweise aus Metall- oder Kunststoffprofilen bestehen, die passend abgelängt und an den Ecken mit geeigneten Verbindern zusammengesteckt sind. Es kann aber auch aus dem gleichen Material wie die Abdeckung 3 bestehen, welches beispielsweise durch Falten oder Zusammenrollen oder durch eine Variation der Materialdicke lokal verstärkt ist, so dass die Schutzvorrichtung 1 insgesamt nur aus einem einzigen Material besteht.

Das optionale elektrische Heizelement 5, welches in Fig. 1 schematisch als mäandeförmiger Draht dargestellt ist, befindet sich unter der Oberseite des Rahmengestells 4 zwischen dem Solarenergiekollektor 2 und der Abdeckung 3. Es ist dazu vorgesehen, Schnee oder Eis auf der Abdeckung 3 zum Schmelzen zu bringen, um eine Behinderung des Einfalls von Sonnenstrahlung auf den Solarenergiekollektor 2 durch eine Ansammlung von Schnee oder Eis auf der Abdeckung 3 zu vermeiden. Das Heizelement 5 kann auch mit der Abdeckung 3 verbunden, beispielsweise auf deren Unterseite aufgeklebt sein. Es wird nur bei Bedarf betrieben, d.h. bestromt.

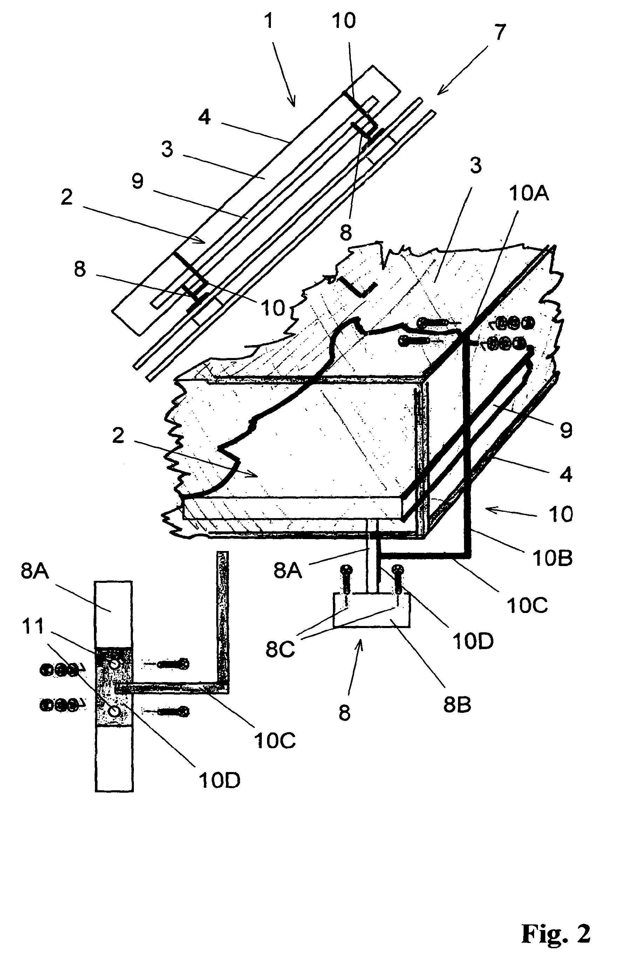

Eine erste Ausführungsform der Befestigung der Schutzvorrichtung 1 ist in Fig. 2 dargestellt. Dabei zeigt Fig. 2 oben einen Längsschnitt durch ein Dach 7 eines Gebäudes mit einem darauf angebrachten Solarenergiekollektor 2, der von einer auf ein Rahmengestell 4 aufgespannten Abdeckung 3 umgeben ist. Rechts darunter ist eine perspektivische Ansicht einer Ecke der gesamten Anordnung zu sehen und links unten ist ein Detail der Befestigung wiedergegeben.

Der Solarenergiekollektor 2 ist auf dem Dach 7 mit Haltern 8 befestigt, die jeweils einerseits mit einem Gehäuserahmen 9 des Solarenergiekollektors 2 und andererseits mit dem Dach 7 verbunden sind. Die Verbindung mit dem Gehäuserahmen 9 ist in Fig. 2 nicht gezeigt und hier auch nicht von Interesse. Von dem Gehäuserahmen 9 aus erstreckt bei jedem Halter 8 ein Abstandsstück 8A, vorzugsweise in Form eines Vierkantrohres, annähernd senkrecht auf das Dach 7 zu. Am Ende des Abstandsstücks 8A befindet sich ein an diesem angeformter oder angeschweißter Flansch 8B, der mehrere Bohrungen 8C zur Verschraubung mit dem Dach 7, insbesondere mit einem Dachbalken, aufweist.

Zur Befestigung des Rahmengestells 4 sind Befestigungsglieder 10 vorgesehen. Jedes von diesen weist einen Anfangsabschnitt 10A auf, der parallel zu einem Teil des Rahmengestells 4 verläuft und mit diesem verschraubt ist. Anschließend folgt ein annähernd senkrecht auf das Dach 7 zulaufender Mittelabschnitt 10B, der in einen annähernd senkrecht auf das Abstandsstück 8A des Halters 8 zulaufenden Endabschnitt 10C übergeht. Den Abschluss des Endabschnitts 10C bildet ein Flansch 10D, der an einer Seite eines das Abstandsstück 8A bildenden Vierkantrohres flächig anliegt. Der Mittelabschnitt 10B eines Befestigungsgliedes 10 liegt bei der in Fig. 2 gezeigten Ausführungsform außerhalb des Rahmengestells 4, könnte jedoch grundsätzlich auch innerhalb desselben liegen.

Wie die Detaildarstellung in Fig. 2 links unten zeigt, weist der Flansch 10D zwei Bohrungen 11 auf, die zur Verschraubung des Flansches 10D mit dem Abstandsstück 8A vorgesehen sind. Wenn ein Solarenergiekollektor 2 mit einer erfindungsgemäßen Schutzvorrichtung 1 ausgestattet werden soll, dann müssen hierzu entsprechende Bohrungen in jedem Abstandsstück 8A ausgeführt werden. Dies kann sowohl vor der Montage des Solarenergiekollektors 2 auf einem Dach 7, als auch in Form einer Nachrüstung an einem bereits auf dem Dach 7 montierten Solarenergiekollektor 2 geschehen, wobei man sich zur richtigen Positionierung der Bohrungen in dem Abstandsstück 8A zweckmäßigerweise einer Schablone bedienen kann.

Durch ihren Aufbau aus einem Rahmengestell 4 und einer dünnen Bespannung 3 ist eine erfindungsgemäße Schutzvorrichtung 1 relativ leichtgewichtig, so dass sie ohne weiteres von den Haltern 8 des Solarenergiekollektors 2 mit getragen werden kann. Vorteilhafterweise erübrigen sich hierdurch zusätzliche Eingriffe am Dach 7 bei der Anbringung der Schutzvorrichtung 1. Es versteht sich, dass für eine stabile Befestigung einer Schutzvorrichtung 1 vorzugsweise ebenso viele Befestigungsglieder 10 verwendet werden, wie Halter 8 für den Solarenergiekollektor 2 vorgesehen sind.

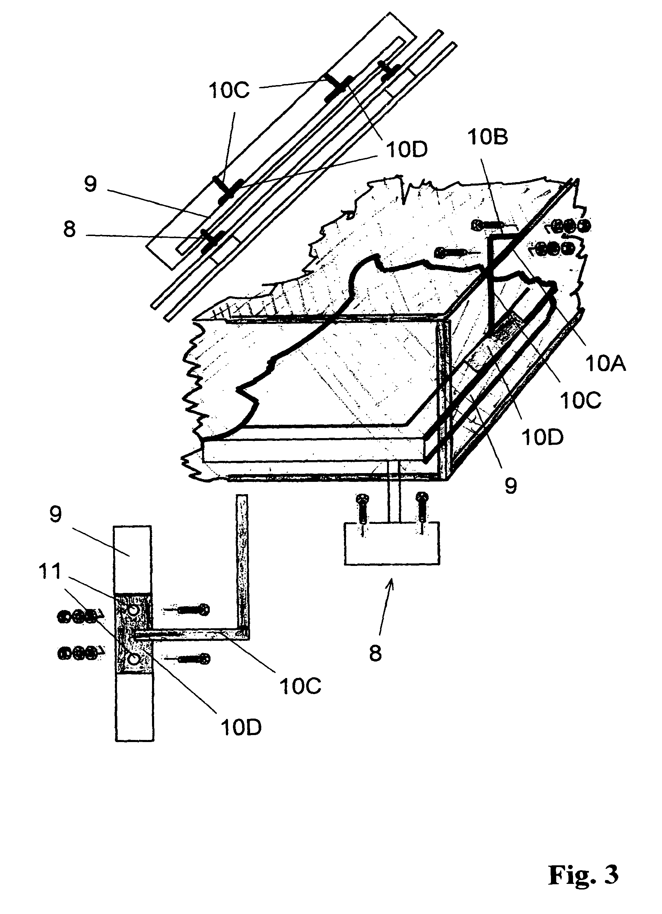

Eine zweite Ausführungsform der Befestigung der Schutzvorrichtung 1 ist in Fig. 3 dargestellt. Dabei zeigt Fig. 3 ebenso wie Fig. 2 oben einen Längsschnitt durch ein Dach 7 eines Gebäudes mit einem darauf angebrachten Solarenergiekollektor 2, der von einer auf ein Rahmengestell 4 aufgespannten Abdeckung 3 umgeben ist. Rechts darunter ist eine perspektivische Ansicht einer Ecke der gesamten Anordnung zu sehen und links unten ist ein Detail der Befestigung wiedergegeben.

Der Unterschied zu der in Fig. 1 gezeigten ersten Ausführungsform besteht darin, dass sich hier der Mittelabschnitt 10B des Befestigungsgliedes 10 nicht auf das Dach 7 zu, sondern annähernd waagrecht ein Stück weit in das Innere der Schutzvorrichtung 1 bis über den Gehäuserahmen 9 des Solarenergiekollektors 2 erstreckt. Der sich daran anschließende Endabschnitt 10C verläuft dann annähernd senkrecht auf den Gehäuserahmen 9 zu und geht schließlich in einen Flansch 10D über, der an dem Gehäuserahmen 9 anliegt.

Zur Befestigung des Flansches 10D an dem Gehäuserahmen 9 ist wiederum eine Schraubverbindung vorgesehen, wozu der Flansch 10D auch bei dieser Ausführungsform entsprechende Bohrungen 11 aufweist. Wie bei der ersten Ausführungsform an den Haltern 8 des Solarenergiekollektors 2 sind bei der zweiten Ausführungsform entsprechende Bohrungen an dem Gehäuserahmen 9 des Solarenergiekollektors 2 auszuführen. Auf dem Dach 7 wird die Schutzvorrichtung auch in diesem Fall von den Haltern 8 mit getragen.

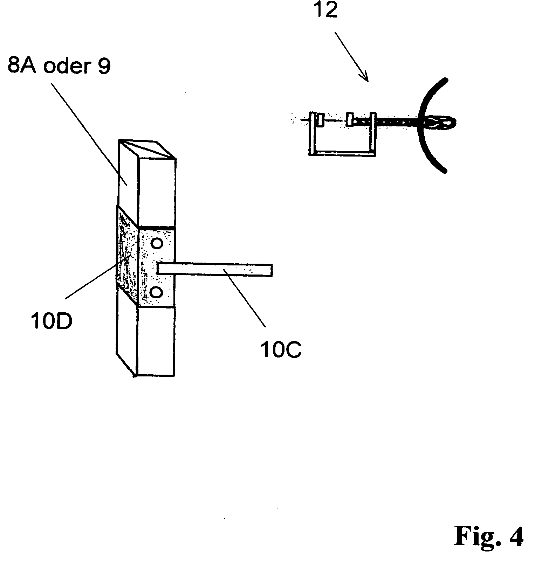

Eine dritte Ausführungsform der Befestigung der Schutzvorrichtung 1 ist in Fig. 4 dargestellt. Sowohl die erste, als auch die zweite Ausführungsform kann zu dieser dritten Ausführungsform modifiziert werden. Sie unterscheidet sich von den ersten beiden Ausführungsformen lediglich durch die Art der Befestigung des Flansches 10D an dem Abstandsstück 8A bzw. an dem Gehäuserahmen 9, indem anstelle einer Schraubverbindung eine Klemmung durch eine oder zwei Schraubzwingen 12 vorgesehen ist. Um diese Art der Befestigung zu erleichtern, ist der Flansch 10D in diesem Fall vorzugsweise so geformt, dass er das Abstandsstück 8A bzw. den Gehäuserahmen 9, wie in Fig. 4 angedeutet, zumindest an zwei oder sogar an drei Seiten umgreift. Hierdurch wird bereits ein Teil der Freiheitsgrade der Bewegung des Flansches 10D gegenüber dem Abstandsstück 8A bzw. dem Gehäuserahmen 9 durch Formschluß ausgeschaltet und die Klemmung durch die Schraubzwingen 12 braucht nur noch eine Bewegung in dem oder den verbleibenden Freiheitsgraden zu hemmen.

Vorteilhaft ist an dieser Art der Befestigung, dass sich die Ausführung von Bohrungen in dem Abstandsstück 8A bzw. in dem Gehäuserahmen 9 erübrigt, was insbesondere die Montage bei einer Nachrüstung der Schutzvorrichtung 1 an einem bereits auf einem Dach 7 befindlichen Solarenergiekollektor 2 vereinfacht.

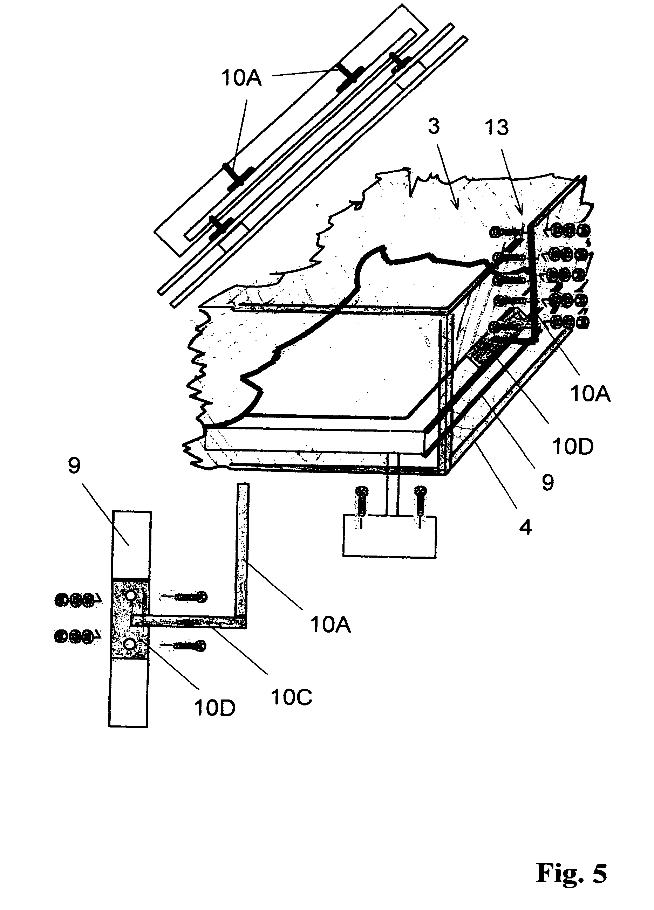

Eine vierte Ausführungsform der Befestigung der Schutzvorrichtung 1 ist in Fig. 5 dargestellt, wobei die gleichen drei Ansichten wie in den Figuren 2 und 3 zu sehen sind. Sowohl die erste, als auch die zweite, als auch die dritte Ausführungsform können zu dieser vierten Ausführungsform modifiziert werden. Sie unterscheidet sich von den ersten drei Ausführungsformen lediglich durch die Art der Befestigung des Anfangsabschnitts 10A des Befestigungsgliedes 10, der in diesem Fall nicht an dem Rahmengestell 4, sondern an einem Verstärkungsabschnitt 13 der Abdeckung 3 befestigt ist. Auf den Anfangsabschnitt 10A folgt bei der in Fig. 5 gezeigten Variante sogleich der Endabschnitt 10C, der in den mit dem Gehäuserahmen 9 verbindbaren Flansch 10D übergeht.

Diese Variante bietet sich insbesondere dann an, wenn die Schutzvorrichtung 1 aus einem einzigen Material besteht, also kein Rahmengestell 4 aus einem anderen, steiferen Material als die Abdeckung 3 vorhanden ist. Der Verstärkungsabschnitt 13 kann in diesem Fall beispielsweise durch eine Faltung oder durch Zusammenrollen oder Übereinanderlegen mehrerer Stücke des Materials der Abdeckung 3 gebildet werden. Für die Verbindung des Anfangsabschnitts 10A mit einem Verstärkungsabschnitt 13 der Abdeckung 3 zeigt Fig. 5 als Beispiel in Analogie zu den anderen Ausführungsbeispielen ebenfalls eine Verschraubung.

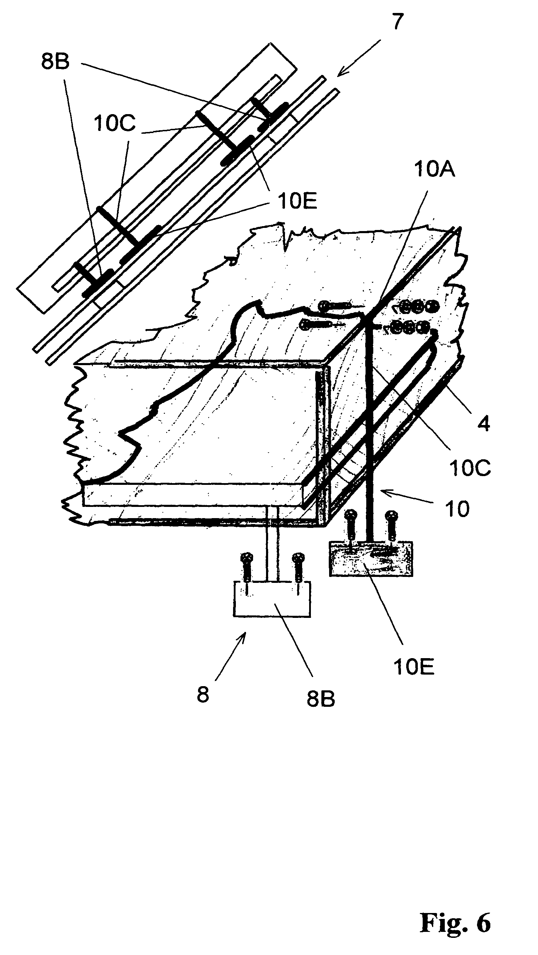

Eine fünfte und letzte Ausführungsform der Befestigung der Schutzvorrichtung 1 ist in Fig. 6 dargestellt, wobei die beiden gezeigten Ansichten den jeweils oberen beiden Ansichten der Figuren 2, 3 und 5 entsprechen. Diese Ausführungsform unterscheidet sich von den vorherigen dadurch, dass das Befestigungsglied 10 der Schutzvorrichtung 1 einen Flansch 10E aufweist, der in seiner Form dem Flansch 8B des Halters 8 des Solarenergiekollektors 2 entspricht und ebenso wie dieser zur direkten Befestigung an dem Dach 7 geeignet ist. Dementsprechend weist das Befestigungsglied 10 in diesem Fall keinen Mittelabschnitt 10B auf, sondern an den zur Befestigung an dem Rahmengestell 4 vorgesehenen Anfangsabschnitt 10A schließt sich unmittelbar der annähernd senkrecht auf das Dach 7 zulaufende Endabschnitt 10C an. Dieser geht dann in den Flansch 10E über.

Die fünfte Ausführungsform eignet sich für Anwendungsfälle, bei denen entweder eine Mitnutzung der Halter 8 des Solarenergiekollektors 2 als Träger der Schutzvorrichtung 1 aus Gewichtsgründen oder wegen einer für die Montage der Befestigungsglieder 10 ungünstigen Formgebung der Halter 8 bzw. des Gehäuserahmens 9 nicht möglich ist, oder bei denen ein Eingriff in diese Bauteile aus anderen Gründen vermieden werden soll.

Aus der vorausgehenden Beschreibung verschiedener Ausführungsformen der Erfindung ergeben sich für den Fachmann eine ganze Reihe weiterer möglicher Varianten. So kann beispielsweise auch die Verbindung der Schutzvorrichtung 1 mit den Anfangsabschnitten 10A von Befestigungsgliedern 10 nach Fig. 5 mit der Verbindung der Befestigungsglieder 10 mit einem Dach 7 nach Fig. 6 kombiniert werden. Auch kommen für die Verbindungen der Befestigungsglieder 10 mit der Schutzvorrichtung 1 und mit den Haltern 8 oder mit dem Gehäuserahmen 9 noch andere Verbindungstechniken als Schrauben und Klemmen mit Schraubzwingen, wie beispielsweise elastisches Einrasten, in Frage. Solche und ähnliche im fachmännischen Ermessen liegenden Variationsmöglichkeiten sind Bestandteil der vorliegenden Erfindung und sollen vom Schutz der Ansprüche umfaßt sein.

## Patentansprüche

1. Schutzvorrichtung für einen Solarenergiekollektor, mit einem von Bestandteilen und anderen Zubehörteilen des Solarenenergiekollektors separaten Rahmengestell, das eine Abdeckung in einer zumindest die Oberseite des Solarenergiekollektors überdeckenden Position in einem vorbestimmten Abstand zu dem Solarenergiekollektor trägt, **dadurch gekennzeichnet, dass** die Abdeckung (3) aus einem strahlungsdurchlässigen flexiblen Flachmaterial besteht, das durch das Rahmengestell (4) dauerhaft in einer dreidimensionalen Form gehalten wird, und dass die Schutzvorrichtung (1) durch mit dem Rahmengestell (4) verbundene oder verbindbare Befestigungsglieder (10) entweder an einem Bestandteil (9) oder anderen Zubehörteil (8) des Solarenergiekollektors oder an einem Dach (7) eines Gebäudes befestigbar ist.

2. Schutzvorrichtung nach Anspruch 1, **dadurch gekennzeichnet, dass** das Flachmaterial eine transparente Kunststoffolie und/oder ein Gitter oder Geflecht aus Metall-, Kunststoff-, Karbon- oder Silikatdrähten, -fäden oder -schnüren ist.

3. Schutzvorrichtung nach einem der Ansprüche 1 oder 2, **dadurch gekennzeichnet, dass** zwischen der Abdeckung (3) und dem Solarenergiekollektor (2) eine Heizvorrichtung (5) angeordnet ist.

4. Schutzvorrichtung nach einem der Ansprüche 1 bis 3, **dadurch gekennzeichnet, dass** das Rahmengestell (4) aus Metall- oder Kunststoffprofilen besteht, die an den Ecken durch eingesteckte Verbindungselemente miteinander verbunden sind.

5. Schutzvorrichtung nach einem der Ansprüche 1 bis 3, **dadurch gekennzeichnet, dass** das Rahmengestell (4) aus dem gleichen Material wie die Abdeckung (3) besteht und gegenüber dieser durch eine größere Materialdicke oder durch Zusammenrollen oder durch Zusammenfalten oder durch Übereinanderlegen einer Vielzahl von Lagen versteift ist.

6. Schutzvorrichtung nach einem der Ansprüche 1 bis 5, **dadurch gekennzeichnet, dass** die Befestigungsglieder (10) der Schutzvorrichtung (1) jeweils einen Flansch (10D) aufweisen, dessen Form so an die Konturen eines Bestandteils (9) oder Zubehörteils (8) des Solarenergiekollektors (2) angepaßt ist, dass er im mit dem Rahmengestell (4) verbundenen Zustand der Befestigungselemente (10) an besagtem Bestandteil (9) oder Zubehörteil (8) des Solarenergiekollektors (2) anliegt.

7. Schutzvorrichtung nach Anspruch 6, **dadurch gekennzeichnet, dass** der Flansch (10D) mindestens eine Bohrung (11) aufweist, welche die Position einer Schraubverbindung definiert.

8. Schutzvorrichtung nach Anspruch 6, **dadurch gekennzeichnet, dass** der Flansch (10D) besagten Bestandteil (9) oder Zubehörteil (8) des Solarenergiekollektors (2) im angelegten Zustand so umgreift, dass er daran mittels einer oder mehrerer Schraubzwingen (12) befestigbar ist.

9. Schutzvorrichtung nach einem der Ansprüche 6 bis 8, **dadurch gekennzeichnet, dass** der Bestandteil (9) oder Zubehörteil (8) des Solarenergiekollektors (2) ein Gehäuserahmen (9) bzw. ein zur Befestigung des Solarenergiekollektors (2) auf dem Dach (7) eines Gebäudes vorgesehener Halter (8) ist.

10. Schutzvorrichtung nach einem der Ansprüche 1 bis 5, **dadurch gekennzeichnet, dass** die Befestigungsglieder (10) der Schutzvorrichtung (1) jeweils einen Flansch (10E) aufweisen, der zur Befestigung auf dem Dach (7) eines Gebäudes geeignet ist.
